# EUROPEAN PATENT APPLICATION

(11) **EP 2 479 229 A1**
(43) Date of publication of application: **25.07.2012**
(21) Application number: 10816851.9
(22) Date of filing: 03.09.2010
(51) Int. Cl.: C09J 7/02, C09J 133/00

(54) **ACRYLIC ADHESIVE TAPE**

(30) Priority: 16.09.2009 JP 2009214836; 03.09.2010 JP 2010197868
(71) Applicant: Nitto Denko Corporation, Ibaraki-shi Osaka 567-8680 (JP)
(72) Inventor: HIROSE, Tetsuya, Ibaraki-shi Osaka 567-8680 (JP); INOKUCHI, Shinji, Ibaraki-shi Osaka 567-8680 (JP); OGAWA, Takuma, Ibaraki-shi Osaka 567-8680 (JP)
(74) Representative: Grünecker, Kinkeldey, Stockmair & Schwanhäusser
(86) International application number: PCT/JP2010/005443
(87) International publication number: WO 2011/033736

(57) **Abstract**

An acrylic pressure-sensitive adhesive tape 10 includes: a core layer 20; a surface layer 30a provided on one side the core layer 20; and a surface layer 30b provided in the other side of the core layer 20. The core layer 20 contains an acrylic polymer (A), a fine particle (B), and a bubble (C). The surface layers 30a and 30b contain an acrylic polymer (D) and an acrylic oligomer (E), respectively.

## Description

### Technical Field

The present invention generally relates to an acrylic pressure-sensitive adhesive, and in particular, to an acrylic pressure-sensitive adhesive tape.

### Background Art

Because acrylic pressure-sensitive adhesive tapes each having an acrylic pressure-sensitive adhesive layer are excellent in light resistance, weatherability, oil resistance, etc., and further excellent in pressure-sensitive adhesive property, such as pressure-sensitive adhesive force and cohesive force, and aging resistance, such as heat resistance and weatherability, the acrylic pressure-sensitive adhesive tapes have been conventionally used in wide applications. The applications of the acrylic pressure-sensitive adhesive tapes particularly include an application to the adherends having low polarity, such as polystyrene, ABS, and polycarbonate, which are widely used as materials for home electronic appliances and building materials, etc.

### Patent Documents

[Patent Document 1] Japanese Patent Application Publication No. 1998-509108
[Patent Document 2] Japanese Patent Application Publication No. 1994-207151
[Patent Document 3] Japanese Patent Application Publication No. 1999-504054
[Patent Document 4] Japanese Patent Application Publication No. 2001-49200
[Patent Document 5] Japanese Patent Application Publication No. 2003-49130
[Patent Document 5] Japanese Patent Application Publication No. 1994-200225
[Patent Document 7] Japanese Patent Application Publication No. 2005-239831

### DISCLOSURE OF THE INVENTION

### Problem to be Solved by the Invention

In the conventional acrylic pressure-sensitive adhesive tapes, there has been the problem that the adhesiveness to adherends having low polarity, such as polystyrene, ABS, and polycarbonate, is low. The adherends having low polarity to be used in home electronic appliances and building materials, etc., are particularly required to have high adhesion reliability, and hence there is a demand for improving the adhesiveness of an acrylic pressure-sensitive adhesive tape to the adherends having low polarity.

The present invention has been made in view of these situations, and a purpose of the invention is to provide an acrylic pressure-sensitive adhesive tape whose adhesiveness to the adherends having low polarity is improved.

### Means for Solving the Problem

An embodiment of the present invention is an acrylic pressure-sensitive adhesive tape. The acrylic pressure-sensitive adhesive tape comprises a core layer and a surface layer provided on one or both sides of the core layer, wherein the core layer contains an acrylic polymer (A), a fine particle (B), and a bubble (C), and wherein the surface layer contains an acrylic polymer (D) and an acrylic oligomer (E).

According to the acrylic pressure-sensitive adhesive tape of the embodiment, the adhesive force to the adherends having low polarity, such as polystyrene, ABS, and polycarbonate, can be improved.

In the acrylic pressure-sensitive adhesive tape according to the aforementioned embodiment, the content of the acrylic oligomer (E) may be within a range of 5 to 45% by mass based on the acrylic polymer (D). The pressure-sensitive adhesive force of the tape, occurring under conditions in which the tape is peeled off in the 90° peeling-off direction at a tension speed of 300 mm/min when 72 hours have elapsed since the adhesion of the tape to polystyrene used as an adherend, may be 45 N/25 mm or larger. The ratio of the thickness of the surface layer to the total thickness of the core layer and the surface layer may be within a range of 8 to 20%. Each of the acrylic polymer (A) and the acrylic polymer (D) may contain a (meth) acrylic acid alkyl ester as a monomer major component. In addition, the weight average molecular weight of the acrylic oligomer (E) may be within a range of 2000 to 20000.

### Advantage of the Invention

According to the present invention, the adhesiveness of an acrylic pressure-sensitive adhesive tape to the adherends having low polarity can be improved.

### BRIEF DESCRIPTION OF THE DRAWING

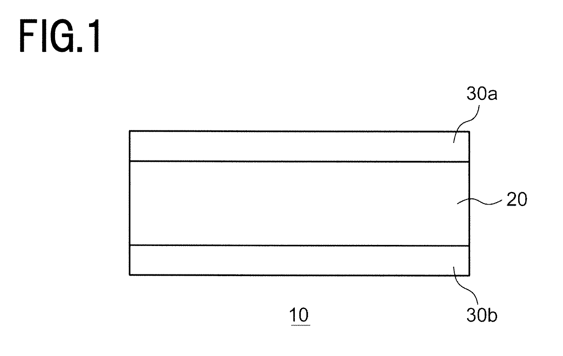

Fig. 1 is a schematic sectional view illustrating the structure of an acrylic pressure-sensitive adhesive tape according to an embodiment.

### Reference Numerals

10 Acrylic Pressure-Sensitive Adhesive Tape
20 Core Layer
30a, 30b Surface Layer

### BEST MODE FOR CARRYING OUT THE INVENTION

Hereinafter, preferred embodiments of the present invention will de described with reference to the accompanying drawing.

Fig. 1 is a schematic sectional view illustrating the structure of an acrylic pressure-sensitive adhesive tape 10 according to an embodiment. The acrylic pressure-sensitive adhesive tape 10 comprises a core layer 20, a surface layer 30a provided on one surface of the core layer 20, and a surface layer 30b provided on the other surface of the core layer. Hereinafter, the surface layers 30a and 30b are collectively referred to as a surface layer 30.

### (Core Layer)

The core layer 20 has a pressure-sensitive adhesive composition and fine particles and bubble are formed in the core layer 20. Hereinafter, each component will be described in detail.

### [Pressure-Sensitive Adhesive Composition]

An acrylic polymer (A) is used as a pressure-sensitive adhesive composition of which the core layer 20 is composed. The acrylic polymer (A) contains, as a monomer unit, 50% by mass or more of alkyl(meth)acrylate having a C₁₋₂₀ alkyl group. The acrylic polymer (A) can use the alkyl (meth) acrylate having a C₁₋₂₀ alkyl group alone or in combination of two or more thereof. The acrylic polymer (A) can be obtained by polymerizing (for example, solution polymerization, emulsion polymerization, or UV polymerization) the alkyl(meth)acrylate along with a polymerization initiator.

The ratio of the alkyl(meth)acrylate having a C₁₋₂₀ alkyl group is 50% by mass or more, preferably 60% by mass or more, and more preferably 70% by mass or more, based on the total mass of the monomer components for preparing the acrylic polymer (A).

Examples of the alkyl(meth)acrylate having a C₁₋₂₀ alkyl group include, for example: (meth) acrylic acid C₁₋₂₀ alkyl esters [preferably (meth) acrylic acid C₂₋₁₄ alkyl esters, and more preferably (meth)acrylic acid C₂₋₁₀ alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth) acrylic acid nonadecyl, and (meth)acrylic acid eicosyl. Herein, the "(meth)acrylic acid alkyl ester" means an acrylic acid alkyl ester and/or a methacrylic acid alkyl ester, and all of the " (meth)..." expressions have the same meaning.

Examples of the (meth) acrylic acid ester other than the (meth)acrylic acid alkyl ester include, for example: (meth) acrylic acid esters having an alicyclic hydrocarbon group, such as cyclopentyl(meth)acrylate, cyclohexyl(meth)acrylate, and isobornyl (meth) acrylate; (meth) acrylic acid esters having an aromatic hydrocarbon group, such as phenyl(meth)acrylate; and (meth) acrylic acid esters obtained from an alcohol derived from a terpene compound, etc.

For the purpose of modifying cohesive force, heat resistance, and cross-linking property, etc., the acrylic polymer (A) may contain, if necessary, another monomer component (copolymerizable monomer) that is copolymerizable with the alkyl(meth)acrylate. Accordingly, the acrylic polymer (A) may contain a copolymerizable monomer along with the alkyl (meth)acrylate as the major component. A monomer having a polar group can be preferably used as the copolymerizable monomer.

Specific examples of the copolymerizable monomer include: carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl) methyl methacrylate; acid anhydride group-containing monomers, such as maleic acid anhydride and itaconic acid anhydride; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalene sulfonic acid; phosphate group-containing monomers, such as 2-hydroxyethyl acryloyl phosphate; (N-substituted)amide monomers, such as (meth)acrylamide, N,N-dimethyl(meth)acrylamide, N,N-diethyl(meth)acrylamide, N-isopropyl(meth)acrylamide, N-butyl(meth)acrylamide, N-methylol(meth)acrylamide, N-methylol propane (meth) acrylamide, N-methoxymethyl(meth)acrylamide, and N-butoxymethyl(meth)acrylamide; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; vinyl esters, such as vinyl acetate and vinyl propionate; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, and N-vinyl morpholine; N-vinyl carboxylic acid amides; lactam monomers, such as N-vinyl caprolactam; cyanoacrylate monomers, such as acrylonitrile and methacrylonitrile; (meth) acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; (meth)acrylic acid alkoxy alkyl monomers, such as (meth)acrylic acid methoxyethyl and (meth)acrylic acid ethoxyethyl; styrene monomers, such as styrene and α-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxy ethylene glycol, and (meth)acrylic acid methoxy polypropylene glycol; acrylic acid ester monomers having a heterocycle, halogen atom, silicon atom, or the like, such as (meth)acrylic acid tetrahydrofurfuryl, fluoride(meth)acrylate, and silicone(meth)acrylate; olefin monomers, such as isoprene, butadiene, and isobutylene; vinyl ether monomers, such as methyl vinyl ether and ethyl vinyl ether; thioglycolic acid; vinyl esters, such as vinyl acetate and vinyl propionate; aromatic vinyl compounds such as styrene, and vinyl toluene; olefins or dienes, such as ethylene, butadiene, isoprene, and isobutylene; vinyl ethers, such as vinyl alkyl ether; vinyl chloride; (meth)acrylic acid alkoxy alkyl monomers, such as (meth)acrylic acid methoxyethyl and (meth)acrylic acid ethoxyethyl; sulfonic acid group-containing monomers, such as vinyl sulfonate sodium; imide group-containing monomers, such as cyclohexyl maleimide and isopropyl maleimide; isocyanate group-containing monomers, such as 2-isocyanate ethyl(meth)acrylate; fluorine atom-containing (meth)acrylates; and silicon atom-containing (meth)acrylates, etc. These copolymerizable monomers can be used alone or in combination of two or more thereof.

When the acrylic polymer (A) contains a copolymerizable monomer along with the alkyl (meth) acrylate as a major component, carboxyl group-containing monomers can be preferably used. Among them, an acrylic acid can be preferably used. The use amount of the copolymerizable monomer is not particularly limited, but the copolymerizable monomer can be usually contained in an amount within a range of 0.1 to 30% by mass, preferably in an amount within a range of 0.5 to 20% by mass, and more preferably in an amount within a range of 1 to 15% by mass, based on the total mass of the monomer components for preparing the acrylic polymer (A).

By containing the copolymerizable monomer in an amount of 0.1% by mass or more, a decrease in the cohesive force of the acrylic pressure-sensitive adhesive tape or sheet made of the acrylic pressure-sensitive adhesive can be prevented and high shear force can be obtained. Further, by making the content of the copolymerizable monomer to be 30% by mass or less, it can be prevented that the cohesive force may become too high and the tackiness at normal temperature (25°C) can be improved.

A polyfunctional monomer may be contained, if necessary, in the acrylic polymer (A) in order to adjust the cohesive force of an acrylic pressure-sensitive adhesive to be formed.

Examples of the polyfunctional polymer include, for example: (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth)acrylate, etc. Among them, trimethylolpropane tri(meth)acrylate, hexanediol di(meth)acrylate, and dipentaerythritol hexa(meth)acrylate can be preferably used. The polyfunctional (meth) acrylates can be used alone or in combination of two or more thereof.

The use amount of the polyfunctional monomer is changed depending on the molecular weight or the number of functional groups thereof, but the polyfunctional monomer is added in an amount within a range of 0.01 to 3.0% by mass, preferably in an amount within a range of 0.02 to 2.0% by mass, and more preferably in an amount within a range of 0.03 to 1.0% by mass, based on the total mass of the monomer components for preparing the acrylic polymer (A).

If the use amount of the polyfunctional monomer exceeds 3.0% by mass based on the total mass of the monomer components for preparing the acrylic polymer (A), for example, the cohesive force of the acrylic pressure-sensitive adhesive may become too high and accordingly there are sometimes the cases where the adhesive force may be decreased. On the other hand, if the use amount thereof is below 0.01% by mass, for example, there are sometimes the cases where the cohesive force of the acrylic pressure-sensitive adhesive may be decreased.

### <Polymerization Initiator>

In preparing the acrylic polymer (A), the acrylic polymer (A) can be easily formed by a curing reaction using heat or ultraviolet rays with the use of a polymerization initiator, such as thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators [for example, 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.]; peroxide polymerization initiators (for example, dibenzoyl peroxide, t-butyl permaleate, and lauroyl peroxide, etc.); and redox polymerization initiator, etc.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, α-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [made by BASF, product name: IRGACURE 651], and anisole methyl ether, etc. Specific examples of the acetophenone photo-polymerization initiator include, for example: 1-hydroxycyclohexyl phenyl ketone [made by BASF, product name: IRGACURE 184], 4-phenoxy dichloroacetophenone, 4-t-butyl-dichloroacetophenone, 1-[4-(2-hydroxyethoxy)-phenyl]-2-hydroxy-2-methyl-1-propane-1 -one [made by BASF, product name: IRGACURE 2959], 2-hydroxy-2-methyl-1-phenyl-propane-1-one [made by BASF, product name: DAROCUR 1173], and methoxy acetophenone, etc. Specific examples of the α-ketol photo-polymerization initiator include, for example: 2-methyl-2-hydroxy propiophenone and 1-[4-(2-hydroxyethyl)-phenyl)-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and α-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photo-polymerization initiator include, for example:
bis(2,6-dimethoxybenzoyl)phenylphosphine oxide, bis(2,6-dimethoxybenzoyl)(2,4,4-trimethylpentyl) phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide,
bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl) phosphine oxide, bis(2,4-dzmethoxybenzoyl)(2-methypropane-1-yl) phosphine oxide, bis(2,4,6-trimethylbenzoyl)(2,4-dipentoxyphenyl) phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trzmethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

Among them,
bis(2,4,6-trimethylbenzoyl)phenylphosphine oxide [made by BASF, product name: IRGACURE 819],
bis(2,4,6-trimethylbenzoyl)-2,4-di-n-butoxyphenylphosphine oxide, 2,4,6-trimethylbenzoyl diphenylphosphine oxide [made by BASF, product name: Lucirin TPO], and
bis(2,6-dimethoxybenzoyl)-2,4,4-trimethylpentylphosphine oxide, are particularly preferred.

The use amount of the photo-polymerization initiator is not particularly limited, but the photo-polymerization initiator is combined in an amount within a range of, for example, 0.01 to 5 parts by mass, preferably in an amount within a range of 0.05 to 3 parts by mass, and more preferably in an amount within a range of 0.08 to 2 parts by mass, based on 100 parts by mass of the monomer components for preparing the acrylic polymer (A).

If the use amount of the photo-polymerization initiator is below 0.01 parts by mass, there are sometimes the cases where a polymerization reaction becomes insufficient. If the use amount thereof exceeds 5 parts by mass, because the photo-polymerization initiator absorbs an ultraviolet ray, the ultraviolet ray does not reach the inside of the pressure-sensitive adhesive layer, thereby causing a decrease in the polymerization ratio and the molecular weight of the generated polymer to be small. Thereby, the cohesive force of the pressure-sensitive adhesive layer to be formed becomes small, and hence there are sometimes the cases where, when the pressure-sensitive adhesive layer is to be peeled off from a film, part of the pressure-sensitive adhesive layer remains on the film and accordingly the film cannot be reused. The photo-polymerization initiators may be used alone or in combination of two or more thereof.

Besides the aforementioned polyfunctional monomers, a cross-linking agent can also be used for adjusting the cohesive force. Commonly-used cross-linking agents can be used as the cross-linking agent. Examples of the cross-linking agents include, for example: epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. Among them, in particular, the isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane. Alternatively, a compound containing, within a molecule thereof, at least one or more isocyanate groups and at least one or more unsaturated bonds, specifically, 2-isocyanate ethyl (meth) acrylate, or the like, can be used as the isocyanate cross-linking agent. Among them, the use of the compound containing, within a molecule thereof, at least one or more isocyanate groups and at least one or more unsaturated bonds as the isocyanate cross-linking agent is preferable in terms of further exerting the advantage of the present invention.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer (A) can also be prepared as a partial polymer (acrylic polymer syrup) that can be obtained by radiating ultraviolet (UV) rays onto a mixture in which the aforementioned monomer components and the polymerization initiator have been combined, so that part of the monomer components are polymerized. The weight average molecular weight (Mw) of the acrylic polymer (A) is within a range of, for example, 30000 to 5000000.

### [Fine Particle (B)]

The fine particle (B) has operational effects of improving the shear adhesive force and processability of the acrylic pressure-sensitive adhesive tape or sheet made of the acrylic pressure-sensitive adhesive.

Examples of the fine particle (B) include: metallic particles, such as copper, nickel, aluminum, chromium, iron, and stainless steel, and metal oxide particles thereof; carbide particles, such as silicon carbide, boron carbide, and carbon nitride, and nitride particles, such as aluminum nitride, silicon nitride, and boron nitride; ceramic particles represented by oxides, such as glass, alumina, and zirconium; inorganic fine particles, such as calcium carbide, aluminum hydroxide, glass, and silica; natural material particles, such as volcanic Shirasu and sand; polymer particles of polystyrene, polymethyl methacrylate, phenol resin, benzoguanamine resin, urea resin, silicone resin, nylon, polyester, polyurethane, polyethylene, polypropylene, polyamide, and polyimide, etc.; organic hollow bodies of vinylidene chloride and acrylic, etc.; and organic spheres, such as nylon bead, acrylic bead, and silicone bead.

Hollow fine particles can be preferably used as the fine particle (B). Among the hollow fine particles, hollow inorganic fine particles can be preferably used in terms of the efficiency of the polymerization using an ultraviolet reaction and weight. Examples of the hollow inorganic fine particles include: glass balloons, such as hollow glass balloons (also referred to as hollow glass microspheres); hollow balloons made of a metallic compound, such as hollow alumina balloons; and hollow balloons made of porcelain, such as hollow ceramic balloons. High-temperature adhesive force can be improved by using the aforementioned hollow glass balloons, without impairing other properties, such as shear force and holding force.

Examples of the hollow glass balloons (hollow glass microspheres) include, for example, ones: with a product name of "Glass Microballoon" (made by FUJI SILYSIA CHEMICAL LTD.); with product names of "CEL-STAR Z-20", "CEL-STAR Z-27", "CEL-STAR CZ-31T", "CEL-STAR Z-36", "CEL-STAR Z-39", "CEL-STAR T-39", "CEL-STAR T-36", and "CEL-STAR PZ-6000" (each of them is made by Tokai Kogyo Co., Ltd.); and with a product name of "SILUX*FINE BALLOON" (made by FINE-BALLOON Ltd.), etc.

The size of the fine particle (B) (average particle size) is not particularly limited, but can be selected from a range of, for example, 1 to 500 µm, preferably from a range of 5 to 200 µm, and more preferably from a range of 10 to 150 µm.

The specific gravity of the fine particle (B) is not particularly limited, but can be selected from a range of, for example, 0.1 to 1.8 g/cm³, preferably from a range of 0.2 to 1.5 g/cm³, and more preferably from a range of 0.2 to 0.5 g/cm³.

If the specific gravity of the fine particle (B) is smaller than 0.1 g/cm³, floating of the fine particles becomes large when combining and mixing the fine particles into the acrylic pressure-sensitive adhesive, and accordingly there are sometimes the cases where it is difficult to uniformly scatter the fine particles. In addition, because the strength of the glass becomes low, it will easily crack. Conversely, if the specific gravity thereof is larger than 1.8 g/cm³, the transmission rate of an ultraviolet ray is decreased, and accordingly there is the fear that the efficiency of the ultraviolet reaction may be decreased. In addition, because the weight of the acrylic pressure-sensitive adhesive becomes large, the workability becomes poor.

The use amount of the fine particle (B) is not particularly limited. If the use amount thereof is below, for example, 10% by volume based on the whole volume of the core layer, the effect of the addition of the fine particles is low. On the other hand, if the use amount thereof exceeds 50% by volume, the adhesive force is decreased.

### [Bubble (C)]

By containing the bubbles (C) in the core layer, the acrylic pressure-sensitive adhesive (acrylic pressure-sensitive adhesive tape) can exhibit good adhesiveness to a curved surface and concave-convex surface, and also exhibit good resistance to resilience.

It is desirable that the bubbles (C) contained in the core layer are basically closed-cell type bubbles, but closed-cell type bubbles and interconnected-cell type bubbles may coexist.

Although the bubble (C) usually has a spherical shape (in particular, a true spherical shape), the shape does not necessarily have to have a true spherical shape and accordingly there may be concavities and convexities on the sphere. The average bubble size (diameter) of the bubble (C) is not particularly limited, but can be selected from a range of, for example, 1 to 1000 µm, preferably from a range of 10 to 500 µm, and more preferably from a range of 30 to 300 µm.

A gas component contained in the bubble (C) (gas component of which the bubble (C) is formed; sometimes referred to as a "bubble-forming gas") is not particularly limited, but various gas components, such as inactive gases including nitrogen, carbon dioxide, and argon, and air, etc., can be used. When a polymerization reaction is performed in a state where a gas that forms the bubbles is contained, it is important that the gas that forms the bubbles does not hamper the reaction. Nitrogen can be preferably used as the gas that forms the bubbles in terms of not hampering a polymerization reaction and cost.

The amount of the bubbles (C) contained in the core layer is not particularly limited, but can be appropriately selected in accordance with the use purpose thereof. For example, the use amount thereof is within a range of 5 to 50% by volume based on the whole volume of the core layer containing the bubbles, and preferably within a range of 8 to 40% by volume. If the mixing amount thereof is below 5% by volume, the effect of mixing the bubbles cannot be obtained. Conversely, if the mixing amount thereof exceeds 50% by volume, there occur the bubbles each penetrating through the core layer, and accordingly the adhesive performance and the appearance are decreased.

In the core layer containing the bubble (C) , the form in which the bubbles are formed is not particularly limited. The core layer containing the bubbles can be formed, for example, in the following ways: (1) the core layer in which the bubbles are formed can be formed by using the core layer in which a gas component that will form the bubbles (a bubble-forming gas) has been mixed beforehand; and (2) the core layer in which the bubbles are formed can be formed by mixing a foaming agent into the core layer. When the latter way (2) is used, the foaming agent is not particularly limited, but can be appropriately selected from, for example, publicly-known foaming agents. For example, heat-expandable microspheres can be used as the foaming agent.

### <Other Components>

Besides the aforementioned components, a thickener, a thixotropic agent, and fillers, etc., may be added in the core layer, if necessary. Examples of the thickener include acrylic rubber, epichlorohydrin rubber, and butyl rubber, etc. Examples of the thixotropic agent include colloid silica and polyvinylpyrrolidone, etc. Examples of the fillers include calcium carbonate, titanium oxide, and clay, etc. Other than those, a plasticizer, anti-aging agent, antioxidant, etc., may be appropriately added. Additives to be added should not be limited thereto.

### (Surface Layer)

The surface layer 30 contains, as its components, the acrylic polymer (D) as a pressure-sensitive adhesive composition and the acrylic oligomer (E) as a tackifier resin. The acrylic polymer (D) used in the surface layer 30 can be selected from the compounds (various monomer components) exemplified as the acrylic polymer (A) of the core layer 20. The components and composition ratio of the acrylic polymer (D) used in the surface layer 30 may or may not be similar to those of the acrylic polymer (A) in the core layer 20. The acrylic polymer (D) can be prepared by using the same polymerization initiator and same polymerization method as those in the acrylic polymer (A) of which the core layer is composed. Hereinafter, the acrylic oligomer (E) will be described in detail.

### [Acrylic Oligomer (E)]

The acrylic oligomer is a polymer having a weight average molecular weight smaller than that of the acrylic polymer (D) and serves as a tackifier resin. The acrylic oligomer has the advantage that inhibition of polymerization is hardly caused in the UV polymerization.

The addition amount of the acrylic oligomer (E) is preferably within a range of 5 to 45 parts by mass, and more preferably within a range of 10 to 30 parts by mass, based on 100 parts by mass of the acrylic polymer (D). If the acrylic oligomer (E) is added in an amount exceeding 45 parts by mass, the elastic modulus of the surface layer 30 becomes large, and hence there are sometimes the cases where the adhesive performance at low temperature is deteriorated or the pressure-sensitive adhesiveness is not exerted even at room temperature. Conversely, if the addition amount thereof is smaller than 5 parts by mass, there are sometimes the cases where the advantage thereof is not obtained.

It is desirable that the glass transition temperature (Tg) of the acrylic oligomer (E) is 20°C or higher, preferably 30°C or higher, and more preferably 40°C or higher. If the glass transition temperature (Tg) is lower than 20°C, the cohesive force of the polymer is decreased at room temperature or higher, and hence there are sometimes the cases where the holding performance or high temperature adhesive performance is decreased.

On the other hand, it is desirable that the weight average molecular weight of the acrylic oligomer (E) is within a range of 2000 to 20000, preferably within a range of 2500 to 15000, and more preferably within a range of 3000 to 10000.

If the molecular weight exceeds 20000, there are sometimes the ceases where the effect of improving the pressure-sensitive adhesive performance in the pressure-sensitive adhesive tape is not sufficiently obtained. On the other hand, if the molecular weight is below 2000, it becomes too low, and hence there are sometimes the cases where a decrease in the pressure-sensitive adhesive performance or holding performance is caused.

The weight average molecular weight of the acrylic polymer (A) or acrylic oligomer (D) can be obtained by polystyrene conversion with the use of a GPC method. Specifically, the mass average molecular weight can be measured by using the HPLC 8020 made by TOSOH CORPORATION and two TSKgelGMH-H (20) columns and at a flow rate of 0.5 ml/min using tetrahydrofuran solvent.

### <Method of Producing Acrylic Oligomer (E)>

The acrylic oligomer (E) can be produced by, for example, polymerizing a (meth)acrylic acid ester with a solution polymerization method, bulk polymerization method, emulsion polymerization method, suspension polymerization method, mass polymerization method, or the like.

Examples of such a (meth) acrylic acid ester include: (meth)acrylic acid alkyl esters, such as (meth)acrylic acid methyl, (meth)acrylic acid ethyl, (meth)acrylic acid propyl, (meth)acrylic acid butyl, (meth)acrylic acid isobutyl, (meth)acrylic acid pentyl, (meth)acrylic acid hexyl, (meth)acrylic acid-2-ethylhexyl, (meth)acrylic acid octyl, (meth)acrylic acid nonyl, (meth)acrylic acid decyl, and (meth)acrylic acid dodecyl; esters of (meth)acrylic acids with alicyclic alcohols, such as cyclohexyl(meth)acrylate and (meth) acrylic acid isobornyl; and (meth) acrylic acid aryl esters, such as (meth) acrylic acid phenyl and (meth) acrylic acid benzyl. These (meth)acrylic acid esters can be used alone or in combination.

Cyclohexyl methacrylate can be preferably used as a monomer unit that forms the acrylic oligomer (E).

Other than the aforementioned (meth) acrylic acid ester component units, the acrylic oligomer (E) can also be obtained by copolymerizing a monomer having a polymerizable unsaturated bond that is copolymerizable with (meth) acrylic acid ester.

Examples of the monomer having a polymerizable unsaturated bond that is copolymerizable with (meth) acrylic acid ester include: (meth)acrylic acid alkoxyalkyls, such as (meth)acrylic acid, (meth)acrylic acid methoxyethyl, (meth)acrylic acid ethoxyethyl, (meth)acrylic acid propoxyethyl, (meth)acrylic acid butoxyethyl, and (meth)acrylic acid ethoxypropyl; salts, such as (meth)acrylic acid alkali metal salt; di (meth) acrylic acid esters of (poly)alkylene glycols, such as di (meth) acrylic acid ester of ethylene glycol, di (meth) acrylic acid ester of diethylene glycol, di(meth)acrylic acid ester of triethylene glycol, di(meth)acrylic acid ester of polyethylene glycol, di(meth)acrylic acid ester of propylene glycol, di(meth)acrylic acid ester of dipropylene glycol, and di(meth)acrylic acid ester of tripropylene glycol; poly(meth)acrylic acid esters, such as trimethylolpropane tri(meth)acrylic acid ester; (meth)acrylonitrile; vinyl acetate; vinylidene chloride; halogenated vinyl compounds, such as (meth) acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine and (meth)acrylic acid-2-aziridinylethyl; epoxy group-containing vinyl monomers, such as allyl glycidyl ether, (meth) acrylic acid glycidyl ether and (meth)acrylic acid-2-ethyl glycidyl ether; hydroxyl group-containing vinyl monomers, such as (meth)acrylic acid-2-hydroxyethyl, (meth)acrylic acid-2-hydroxypropyl, monoesters of (meth)acrylic acids with polypropylene glycol or polyethylene glycol, and adducts of lactones with (meth)acrylic acid-2-hydroxyethyl; fluorine-containing vinyl monomers, such as fluorine-substituted (meth)acrylic acid alkyl ester; unsaturated carboxylic acids including itaconic acid, crotonic acid, maleic acid, and fumaric acid, salts thereof, (partial)ester compounds thereof, and acid anhydrides thereof; reactive halogen-containing vinyl monomers, such as 2-chloroethyl vinyl ether and monochloro vinyl acetate; amide group-containing vinyl monomers, such as methacrylamide, N-methylol methacrylamide, N-methoxyethyl methacrylamide, N-butoxymethyl methacrylamide, and N-acryloyl morpholine; organic silicon-containing vinyl monomers, such as vinyltrimethoxysilane, γ-methacryloxpropyl trimethoxy silane, allyltrimethoxysilane, trimethoxysilylpropylallylamine, and 2-methoxy ethoxy trimethoxy silane; and in addition to the above compounds, macro monomers having a radical polymerizable vinyl group at the terminal of a monomer in which vinyl groups are polymerized. These monomers may be copolymerized, alone or in combination, with the aforementioned (meth)acrylic acid ester.

In the acrylic pressure-sensitive adhesive tape according to the present embodiment, for example, the copolymer of cyclohexyl methacrylate (CHMA) and isobutyl methacrylate (IBMA), that of cyclohexyl methacrylate (CHMA) and isobornyl methacrylate (IBXMA), that of cyclohexyl methacrylate (CHMA) and acryloyl morpholine (ACMO), and that of cyclohexyl methacrylate (CHMA) and diethylacrylamide (DEAA), are preferred, as the acrylic oligomer (E) that forms the surface layer, in terms of providing an acrylic pressure-sensitive adhesive tape excellent in the adhesiveness to the adherends having low polarity, such as polystyrene.

As the composition ratio of the copolymer that forms the acrylic oligomer (E), the content of cyclohexyl methacrylate (CHMA) is within a range of 50 to 85% by mass, and preferably within a range of 55 to 75% by mass; and that of isobutyl methacrylate (IBMA), isobornyl methacrylate (IBXMA), acryloyl morpholine (ACMO), or diethylacrylamide (DEAA) is within a range of 15 to 50% by mass, and preferably within a range of 25 to 45% by mass.

In addition, a functional group that is reactive with an epoxy group or isocyanate group may be introduced into the acrylic oligomer (E) . Examples of such a functional group include a hydroxyl group, carboxyl group, amino group, amide group, and mercapto group. In producing the acrylic oligomer (E), it is preferable to use a monomer having such a functional group.

### <Method of Adjusting Molecular Weight of Acrylic Oligomer (E)>

For the adjustment of the molecular weight of the acrylic oligomer (E), a chain transfer agent can be used during the polymerization of the oligomer (E). Examples of the chain transfer agent to be used include: compounds having a mercapto group, such as octyl mercaptan, dodecyl mercaptan, and t-dodecyl mercaptan; thioglycolic acid, thioglycolic acid ethyl, thioglycolic acid propyl, thioglycolic acid butyl, thioglycolic acid t-butyl, thioglycolic acid 2-ethylhexyl, thioglycolic acid octyl, thioglycolic acid decyl, thioglycolic acid dodecyl, thioglycolic acid ester of ethylene glycol, thioglycolic acid ester of neopentyl glycol, and thioglycolic acid ester of pentaerythritol. Among them, thioglycolic acids can be preferably used.

The use amount of the chain transfer agent is not particularly limited, but the agent is usually contained in an amount within a range of 0.1 to 20 parts by mass, preferably in an amount within a range of 0.2 to 15 parts by mass, and more preferably in an amount within a range of 0. 3 to 10 parts by mass, based on 100 parts by mass of the acrylic monomer. By adjusting the addition amount of the chain transfer agent as stated above, the acrylic oligomer (E) having a preferred molecular weight can be obtained.

In the acrylic pressure-sensitive adhesive tape according to the present embodiment, as the components that form the surface layer, the acrylic polymer (D) and the acrylic oligomer (E) are essentially used and a cross-linking agent can be used, if necessary, to adjust the cohesive force. A cross-linking agent similar to that in the core layer can be appropriately selected to be used.

### (Ratio of Layer Thickness)

The ratio of the thickness of the surface layer 30a (or surface layer 30b) to the total thickness of the core layer 20 and the surface layer 30a (or surface layer 30b) is preferably within a range of 8 to 20%. The total thickness of the acrylic pressure-sensitive adhesive tape (total thickness of the core layer and the surface layer) is not particularly limited, but is within a range of 0.4 mm to 4.0 mm, and preferably within a range of 0.5 mm to 2.5 mm.

### (Method of Forming Multi-Layers)

The method of laminating the core layer and the surface layer is not particularly limited, but the methods described below can be used.
(1) Method of forming multi-layers by laminating the surface layer on the core layer after the two layers have been separately cured: this method has the advantage that the accuracy of each layer thickness can be enhanced.
(2) Method of coating the core layer (or surface layer) on the surface layer (or core layer) that has been cured beforehand and then curing the core layer (or surface layer) : in this method, because one layer is coated on another layer that has been cured beforehand, the accuracy of each layer thickness can be enhanced. Further, because one layer can be collectively coated on another layer that has been cured beforehand, the production steps can be simplified and the production time can be shortened.
(3) Method of sequentially or simultaneously coating the core layer (or surface layer) on the coated surface layer (or core layer) and then curing the two layers: in this method, both the surface layer and the core layer can be collectively coated.

In forming each layer, a coating roll, such as a roll coater or comma coater, may be used, or a slot die may be used. In particular, in the aforementioned method (3), a multi-layer slot die for coating each layer may also be used.

According to the acrylic pressure-sensitive adhesive tape described above, the adhesive force to adherends having low polarity, such as polystyrene, ABS, and polycarbonate, can be improved by providing a multi-layer structure in which a surface layer containing the acrylic polymer (D) and the acrylic oligomer (E) and a core layer are laminated on each other.

In the acrylic pressure-sensitive adhesive tape according to the aforementioned embodiment, the surface layers are respectively provided on both sides of the core layer, but the surface may be provided on either side of the core layer. Examples

Hereinafter, the present invention will be described based on Examples, but the invention should not be limited at all by these Examples.

Table 1 shows the layer structures and components of the acrylic pressure-sensitive adhesive tapes according to Examples 1 to 9 and Comparative Examples 1 and 2.

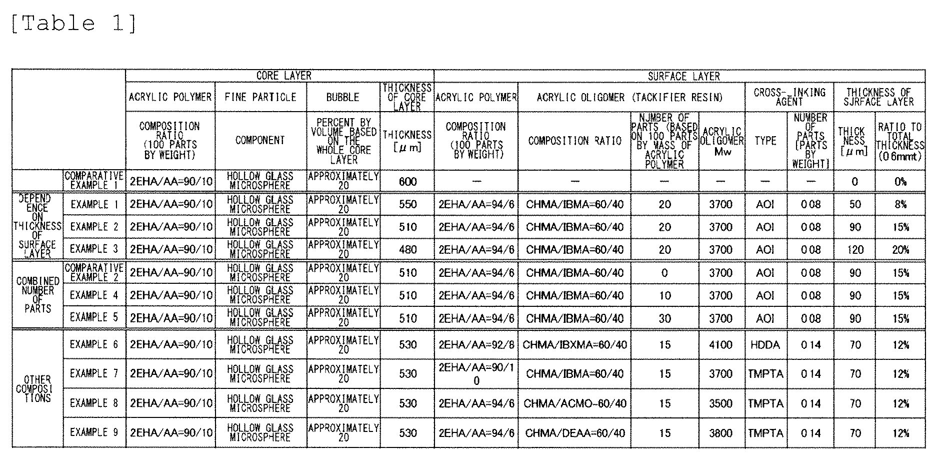

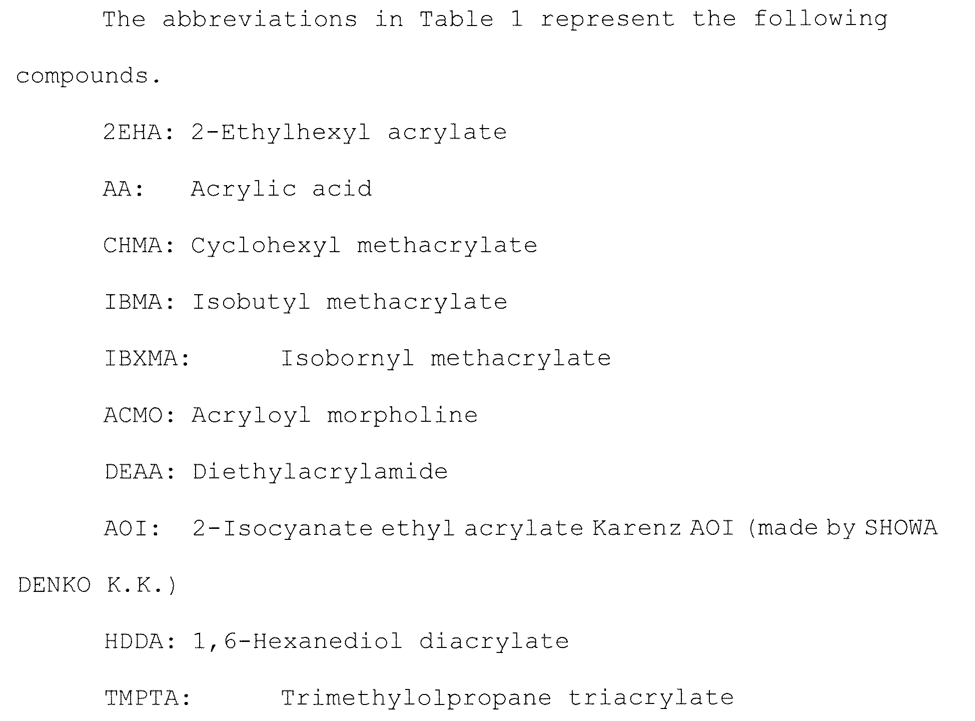

### (Preparation of Acrylic Polymer Syrup 1 (2-EHA/AA = 90/10) as (A) Component)

After a photo-polymerization initiator (product name of "IRGACURE 651" made by BASF, 0.05 parts by mass) and a photo-polymerization initiator (product name of "IRGACURE 184" made by BASF, 0.05 parts by mass) were combined into a monomer mixture that was formed with 2-ethylhexyl acrylate (90 parts by mass) and acrylic acid (10 parts by mass), ultraviolet rays were radiated until the viscosity (BH viscometer, No. 5 rotor, 10 rpm, measurement temperature: 30°C) became 15 Pa*s to obtain a partially polymerized composition (acrylic polymer syrup 1).

### (Preparation of Acrylic Polymer Syrup 2 (2-EHA/AA = 94/6) as (D) Component)

After a photo-polymerization initiator (product name of "IRGACURE 651" made by BASF, 0.07 parts by mass) and a photo-polymerization initiator (product name of "IRGACURE 184" made by BASF, 0.07 parts by mass) were combined into a monomer mixture that was formed with 2-ethylhexyl acrylate (94 parts by mass) and acrylic acid (6 parts by mass), ultraviolet rays were radiated until the viscosity (BH viscometer, No. 5 rotor, 10 rpm, measurement temperature: 30°C) became 15 Pa*s to obtain a partially polymerized composition (acrylic polymer syrup 2).

### (Preparation of Acrylic Oligomer 1 (CHMA/IBMA = 60/40) as (E) Component)

After cyclohexyl methacrylate (CHMA, 60 parts by mass), isobutyl methacrylate (IBMA, 40 parts by mass), and thioglycolic acid (4.0 parts by mass) were combined together, nitrogen gas was blown thereinto to remove dissolved oxygen. When the mixture was then heated to 90°C, Perhexyl O (made by NOF CORPORATION, 0.005 parts by mass) and Perhexyl D (made by NOF CORPORATION, 0.01 parts by mass) were mixed. Further, after the mixture was stirred at 90°C for one hour, the mixture was heated to 150°C over one hour to be stirred at the temperature for one hour. Subsequently, the mixture was heated to 170°C over one hour to be stirred at the temperature for 60 minutes.

Subsequently, the mixture was depressurized at 170°C and then stirred for one hour to remove the residual monomers, so that the acrylic oligomer 1 was obtained. The weight average molecular weight of the obtained acrylic oligomer was 3700.

### (Example 1)

Hereinafter, a method of producing the acrylic pressure-sensitive adhesive tape according to Example 1 will be described.

### (Preparation of Acrylic Pressure-Sensitive Adhesive Composition 1 (Composition for Core Layer))

After 1,6-hexanediol diacrylate (0.08 parts by mass) and a photo-polymerization initiator (product name of "IRGACURE 651" made by BASF, 0.04 parts by mass) were combined into the aforementioned acrylic polymer syrup 1 (100 parts by mass), hollow glass microspheres (product name of "CEL-STAR Z-27" made by Tokai Kogyo Co., Ltd.) were further added in an amount of 9.5 parts by mass based on the partially-polymerized monomer syrup.

A precursor of the pressure-sensitive adhesive composition was prepared by adding a fluorochemical surfactant (product name of "Surflon S-393" (made by AGC SEIMI CHEMICAL CO., LTD.; acrylic copolymer having a polyoxyethylene group and a fluorinated hydrocarbon group in its side chain; MW = 8300, 0.5 parts by mass) into the above acrylic polymer syrup into which the hollow glass microspheres had been added. In the precursor of the pressure-sensitive adhesive composition, the ratio of the volume of the hollow glass microspheres to the whole volume of the precursor of the pressure-sensitive adhesive composition was approximately 23% by volume.

The precursor of the pressure-sensitive adhesive composition was introduced between the minute teeth on a stator in which the minute teeth are provided on a disk having a through-hole at its center, and the minute teeth on a rotor that faces the stator having the teeth, the minute teeth on the rotor being provided on a disk and being as minute as the teeth on the stator, in an apparatus provided with the stator and rotor. While the rotor was being rotated at high speed, nitrogen gas was introduced into the precursor of the pressure-sensitive adhesive composition through the through-hole to mix bubbles into the precursor thereof. Thereby, the acrylic pressure-sensitive adhesive composition 1 for the core layer was obtained. The bubbles were mixed such that the ratio of the volume of the bubbles to the whole volume of the acrylic pressure-sensitive adhesive composition 1 was approximately 20% by volume.

### (Preparation of Acrylic Pressure-Sensitive Adhesive Composition 2 (Composition for Surface Layer))

2-Isocyanate ethyl acrylate (0.08 parts by mass) and the previously obtained acrylic oligomer 1 (20 parts by mass) were combined into the aforementioned acrylic polymer syrup 2 (100 parts by mass) to obtain the acrylic pressure-sensitive adhesive composition 2 for the surface layer.

### (Production of Core Layer)

The acrylic pressure-sensitive adhesive composition 1 was coated, with a roll coater, on the surface of a polyester film (release liner made of polyester) having a thickness of 38 µm, the surface of the film being subjected to a release treatment, so that the thickness of the coating was 550 µm. Subsequently, the surface of a similar polyester release liner that has been subjected to a release treatment was pasted to the other surface of the coated acrylic pressure-sensitive adhesive composition 1 such that the surface that has been subjected to a release treatment faced the one surface of the acrylic pressure-sensitive adhesive composition. Subsequently, ultraviolet rays were radiated, for three minutes, onto both the surfaces of the acrylic pressure-sensitive adhesive composition 1 using black light lamps each having a lighting intensity of 5 mW/cm². Thus, a core layer made of the acrylic pressure-sensitive adhesive layer having a thickness of 550 µm was obtained.

### (Production of Surface Layer)

The aforementioned acrylic pressure-sensitive adhesive composition 2 was coated, with a roll coater, on the surface of a polyester film (release liner made of polyester) having a thickness of 38 µm, the surface of the film being subjected to a release treatment, so that the thickness of the coating was 50 µm. Subsequently, the surface of a similar polyester release liner that has been subjected to a release treatment was pasted to the other surface of the coated acrylic pressure-sensitive adhesive composition 2 such that the surface that has been subjected to a release treatment faced the one surface of the acrylic pressure-sensitive adhesive composition 2. Subsequently, ultraviolet rays were radiated, for three minutes, onto both the surfaces of the acrylic pressure-sensitive adhesive composition 2 using black light lamps each having a lighting intensity of 5 mW/cm². Thus, a surface layer made of the acrylic pressure-sensitive adhesive layer having a thickness of 50 µm was obtained.

### (Pasting of Core Layer/Surface Layer)

The acrylic pressure-sensitive adhesive tape according to Example 1 was obtained by pasting together the respective pressure-sensitive adhesive surfaces of the core layer and the surface layer, which were obtained in the aforementioned procedures, after the respective release liners pasted to one surface of the core layer and to that of the surface layer had been peeled off.

### (Examples 2 to 9)

The basic method for producing the acrylic pressure-sensitive adhesive tapes according to Examples 2 to 9 is the same as that in Example 1. However, the tape according to each Example was produced in accordance with the components and the thickness of the surface layer, etc., shown in Table 1. In Examples 2 and 3, the thicknesses of the surface layers were made to be 90 µm and 120 µm, respectively. In Examples, 1,2, and 3, the ratios of the thicknesses of the surface layers to the total thicknesses of the core layers and the surface layers were 8%, 15%, and 20%, respectively. In Examples 4 and 5, the contents of the acrylic oligomer (E) were respectively made to be 10 parts by mass and 30 parts by mass, based on the acrylic polymer syrups 2 (100 parts by mass) as the (D) components. In Examples 6 to 9, the thicknesses of the surface layers were commonly made to be 70 µm, but the composition ratios of the acrylic polymers (D) of the surface layers, the compositions of the acrylic oligomer (E), and the cross-linking agencies were appropriately changed.

### (Comparative Example)

The acrylic pressure-sensitive adhesive tape according to Comparative Example 1 is a single body of a core layer without a surface layer. The acrylic pressure-sensitive adhesive tape according to Comparative Example 2 does not contain the acrylic oligomer (E) in the surface layer.

### (Test Method)

### [90° Peeling-Off Test]

A SUS 304-BA plate, aluminum plate, PMMA plate, ABS plate, polycarbonate plate, and polystyrene plate were prepared as adherends. The acrylic pressure-sensitive adhesive tape according to each of Examples and Comparative Examples, in which the release liner on the core layer side had been peeled off to be backed by an aluminum film having a thickness of 130 µm, was left under an atmosphere of 23°C for 30 minutes. Thereafter, the release film on the other side of the acrylic pressure-sensitive adhesive tape was peeled off to expose the surface layer. After the pressure-sensitive adhesive tape was press-bonded to each of the adherends by one way of a 5-kg roller, the tape was aged at 23°C and 50% RH for 72 hours. After the aging, the acrylic pressure-sensitive adhesive tape was peeled off, under the atmosphere of 23°C, in the 90° peeling-off direction at a tension speed of 300 mm/min to measure the pressure-sensitive adhesive force (unit: N/25 mm) to each of the adherends. In the acrylic pressure-sensitive adhesive tape according to Comparative Example 1, the adhesive force between the core layer and each of the adherends was measured by exposing the core layer. The measurement results are shown in Table 2.

**[Table 2]**

| | ADHERENDS HAVING LOW POLARITY | | | | | |
|---|---|---|---|---|---|---|
| | STAINLESS S EEL | ALUMINUM | ACRYLIC PLATE | ABS PLATE | POLYCARBONATE PLATE | POLYSTYRENE PLATE |
| COMPARATIVE EXAMPLE 1 | 44.3 | 31.7 | 36.9 | 25.8 | 33.7 | 20.5 |
| EXAMPLE 1 | 62.0 | 48.3 | 47.8 | 48.0 | 48.4 | 48.1 |
| EXAMPLE 2 | 63.4 | 49.4 | 48.9 | 49.8 | 50.5 | 49.3 |
| EXAMPLE 3 | 65.0 | 51.6 | 50.1 | 47.2 | 51.8 | 52.5 |
| COMPARATIVE EXAMPLE 2 | 45.0 | 36.2 | 35.8 | 30.6 | 38.2 | 24.3 |
| EXAMPLE 4 | 60.2 | 46.8 | 46.3 | 44.2 | 45.9 | 48.3 |
| EXAMPLE 5 | 65.3 | 52.8 | 50.2 | 53.6 | 54.3 | 51.9 |
| EXAMPLE 6 | 62.3 | 52.8 | 48.2 | 47.0 | 52.1 | 48.0 |
| EXAMPLE 7 | 66.8 | 54.0 | 53.2 | 50.1 | 50.8 | 52.6 |
| EXAMPLE 8 | 58.3 | 44.6 | 45.5 | 47.3 | 46.7 | 47.4 |
| EXAMPLE 9 | 57.6 | 43.8 | 45.5 | 46.8 | 45.3 | 48.2 |

As shown in Table 2, it has been confirmed that the pressure-sensitive adhesive force to each of the adherends was improved in every Example, in comparison with that in Comparative Example 1 in which the pressure-sensitive adhesive tape is a single body of a core layer. Also, it has been confirmed that the pressure-sensitive adhesive force in Examples 4 and 5 each containing the acrylic oligomer (E) in the surface layer is larger than that in Comparative Example 2 having multiple layers but not containing the acrylic oligomer (E) in the surface layer. Further, it can be learned from the comparison of Examples 4 and 5 that the pressure-sensitive adhesive force is increased as the content of the acrylic oligomer (E) is larger.

It can be learned from the results of Examples 1 to 3 that the pressure-sensitive adhesive force is remarkably improved in comparison with that in each of Comparative Examples 1 and 2, with the ratio of the thickness of the surface layer to the total thickness being in a range of 8 to 20%. If the ratio is larger than 20%, there are sometimes the cases where the effects to be expected because of the provision of a core layer containing bubbles, such as the stress relaxation property and level difference absorbing property as a pressure-sensitive adhesive tape, cannot be obtained, and hence which is not preferable.

### Industrial Applicability

The present invention can be applied to the fields with respect to an acrylic pressure-sensitive adhesive tape.

## Claims

1. An acrylic pressure-sensitive adhesive tape comprising:
a core layer; and
a surface layer provided on one or both sides of the core layer, wherein
the core layer contains an acrylic polymer (A), a fine particle (B), and a bubble (C), and wherein
the surface layer contains an acrylic polymer (D) and an acrylic oligomer (E).

2. The acrylic pressure-sensitive adhesive tape according to claim 1, wherein
the content of the acrylic oligomer (E) is within a range of 5 to 45 parts by mass based on 100 parts by mass of the acrylic polymer (D).

3. The acrylic pressure-sensitive adhesive tape according to claim 1 or claim 2, wherein
the pressure-sensitive adhesive force of the tape, occurring under conditions in which the tape is peeled off in the 90° peeling-off direction at a tension speed of 300 mm/min when 72 hours have elapsed since the adhesion of the tape to polystyrene used as an adherend, is 45 N/25 mm or larger.

4. The acrylic pressure-sensitive adhesive tape according to any one of claims 1 to 3, wherein
the ratio of the thickness of the surface layer to the total thickness of the core layer and the surface layer is within a range of 8 to 20%.

5. The acrylic pressure-sensitive adhesive tape according to any one of claims 1 to 4, wherein
each of the acrylic polymer (A) and the acrylic polymer (D)contains a (meth)acrylic acid alkyl ester as a monomer major component.

6. The acrylic pressure-sensitive adhesive tape according to any one of claims 1 to 5, wherein
the weight average molecular weight of the acrylic oligomer (E) is within a range of 2000 to 20000.
